# EUROPEAN PATENT APPLICATION

(11) **EP 1 571 860 A1**
(43) Date of publication of application: **07.09.2005**
(21) Application number: 04004845.6
(22) Date of filing: 02.03.2004
(51) Int. Cl.: H04Q 7/34, H04Q 7/38

(54) **Method and system for restoring mobile terminal mobility information after a failure of a network node.**

(71) Applicant: SIEMENS AKTIENGESELLSCHAFT, 80333 München (DE)
(72) Inventor: Bolz, Gert, 36154 Hosenfeld (DE); Friedrich, Bernhard, 37247 Grossalmerode (DE)

(57) **Abstract**

A method and arrangements for restoring information concerning a terminated service within a communication network

The present invention relates to a method and arrangements (MS, RAN, SN) for restoring information concerning a terminated service within a communication network. An aspect of the invention is a method and arrangements (MS, RAN, SN) for restoring information concerning a terminated service within a communication network comprising the following steps or means:
a) providing network specific information during normal operation activities,
b) providing selective information in the case of detecting loss of data,
c) comparing said network specific information with said selective information and
d) depending on the result of said comparison initiating a re-registration process.

The invention is preferably used in the mobile communication field.

## Description

### FIELD OF THE INVENTION

The present invention relates to a method and arrangements for restoring information concerning a terminated service within a communication network.

It is preferably used in the field of Public Land Mobile Networks (PLMN) based on exchanging mobile service information among different network entities.

### BACKROUND OF THE INVENTION

Basically a mobile core network consists of a serving network (SN) and a home network (HN). The SN is connected to the radio access network (RAN). The mobile station (MS) interacts via the radio interface with the RAN and via higher layer protocols with the core network (CN) nodes.

Basically the SN accommodate the mobility information of the MS in IDLE mode.

In case of an outage of the serving network node the mobility information of the MS is lost.

Examples for an outage:
- failures in the software or control system
- failures by physical damage
- software upgrade

If the serving network node is repaired or an alternative node is available the location of the MS is still not known.

In case of a mobile terminated service request either the MS must be searched within the complete SN node service area or the MS is not reachable for mobile terminated services at all.

Today's serving network nodes (e.g. MSC) serve uniquely a geographical area. The SN nodes and the RAN nodes are connected based on a clear hierarchy (SN : RAN = 1 : n). Therefore a RAN is connected to one SN node only.

In case of mobility data loss within a SN node, the following mechanisms are used to restore the mobility data within the SN node:
- Mobile Originated (MO)
   (a) Time based : Periodic Update of the location The MS autonomously triggers an update location to the core network after a defined inactivity time in the IDLE mode.
   (b) Event based : Service Request e.g. mobile originated call To invoke a mobile service the MS triggers a service request to the core network.
- Mobile Terminated (MT)
   (c) Event based : Service Request e.g. Short Message Services (SMS-MT) or other services like Multi Media Messaging Service, Location Service, Any Time Interrogation or Network Initiated Context Activation.
      In case of a MT service request the SN node must locate the MS. Therefore the SN node triggers all connected RAN nodes to search the MS within the complete service area of the SN node. Thereupon the MS answers to that request and the mobility data can be restored.

The searching within the complete SN node service area is very ineffective and may produce overload in the RAN. As a result a service degration (MO/MT) for the mobile stations within this service area is possible.

The constant technological improvement of performance and capacity of mobile network nodes will lead to a concentration e.g. of SN nodes. Because of that the search problem get worse.

To improve the mobile originated service availability the SN - RAN can be (fully) meshed inter-connected based on pool areas (SN : RAN = m : n'). Therefore a RAN can be connected to several SN nodes.

In this scenario the above described mechanisms (a,b,c) are still used to restore the mobility data within the SN node.

The searching within the complete SN node service area, which is in loadsharing (m:n') scenarios certainly larger than in hierarchical (1:n) scenarios, represents an intensifying of the above mentioned disadvantages. Due to the pool area concept a service degration (MO/MT) for mobile stations registered in SN nodes, different from the failed SN node, is also possible.

Due to the above mentioned problems the searching mechanism is no suitable instrument for restoration of lost mobility data in SN nodes.

The remaining MO restoration mechanisms are not sufficient for a user-friendly mobile terminated service availability.

It is therefore an object of the present invention to provide a method and arrangement for restoring information concerning a terminated service which overcome the above mentioned problems.

This object is achieved by features of a method and arrangements which are mentioned in the independent claims. Further advantageous embodiments of the invention are described in the dependent claims.

### SUMMARY OF INVENTION

An aspect of the invention is a method for restoring information concerning a terminated service within a communication network comprising the following steps of:
a) providing network specific information during normal operation activities,
b) providing selective information in the case of detecting loss of data,
c) comparing said network specific information with said selective information and
d) depending on the result of said comparison initiating a re-registration process.

A further aspect of the invention is to provide arrangements which perform the above mentioned method, preferably a terminal equipment comprising
- means for receiving network specific information during normal operation activities,
- means for receiving selective information in the case of detecting loss of data,
- means for comparing said network specific information with said selective information and
   means for initiating a re-registration process depending on the result of said comparison,
   as well as a
   Network node comprising
- means for sending network specific information during normal operation activities,
- means for sending selective information in the case of detecting loss of data and
- means for reacting to a re-registration process,
   as well as a
   Network node comprising
- means for sending network specific information during normal operation activities and
- means for sending selective information in the case of detecting loss of data.

The invention is particularly used in the mobile network area. Selective information preferably comprises failure information of a network node. The loss of data is related to mobility data of a terminal equipment. The Terminal equipment is represented by a mobile station. The Network nodes are particularly represented by radio access network nodes and serving network nodes.

In case of mobility data loss within a SN node, the following mechanism should be used (in addition to the existing MO restoration mechanisms) in order to optimize the mobile terminated service availability for a mobile user.

The mechanism is based on the provision of selection information to a mobile station in order to trigger mobile originated activities in case of matching selection criteria.

### For example MS activities are necessary in case of mobility data loss of a serving network node:

During normal operation activities, the SN node provides the MS with SN node specific information (e.g. unique SN node identity and additional information). The MS memorizes this information. After mobility data loss in the SN node, the RAN may be informed about the failure by the SN node, or the RAN detects the outage of the SN node by itself. When the repaired or an alternative SN node is available, the RAN gives selective failure information (e.g. unique SN node identity and additional failure/reaction information) to the mobile stations, which verify the selective failure information, and trigger, if necessary, a re-registration to mobile core network. Due to the selective failure information only mobile stations, which had previously registered to the failed SN node, are affected.

The RAN transfers the re-registration requests to the already repaired SN node or to an alternative SN node for further processing. As a result of thus, the MS location is known within the SN, and therefore it is reachable again for mobile terminated service requests.

The described mechanism can also be used for the restoration of mobility data in other core network nodes, e.g. to accelerate HLR restoration (MAP RESET procedure).

Notes related to the SN node failure example:
1. The restoration based on MT service requests, which results in a searching of the MS in the complete SN node service area, should be disabled to avoid tremendous network load.
2. The provision of the SN node specific information to the mobile station may be done within the mobility management handling in a secure manner (e.g. within MM specific procedures like Attach, Location Update or Routing Area Update.)
3. SN node failure detection:
   a) External detectable failure (complete outage):
      The RAN itself detects the outage of a SN node e.g. SS7 and IP based mechanisms
   b) External not detectable failure (internal failure):
      - SN node detects the loss of mobility data itself and informs the RAN about the failure when it is available
         again
         or
      - manual activity by RAN operator e.g. due to alarming
4. The RAN must be able to route MS requests to an alternative node or to the repaired node.
5. The RAN informs only the respective MS about the SN node failure:
   - by logical restriction Two cases have to be distinguished:
      a) failed SN node not available:

      In this case all MS, which have been registered in the failed SN node are triggered to start the re-registration procedure, e.g. broadcast the failed
      SN node identity.

      b) failed SN node available again:
         In this case all MS, which have not yet been re-registered after the SN node recovery have to be triggered to start the re-registration procedure, e.g. broadcast of the failed SN node identity and a recovery counter.
         The recovery counter gets incremented after the outage, when the SN node becomes available again.
         The SN node identity and the Recovery Counter is provided to the MS by every SN node, e.g. during all MM specific procedures. The MS/SIM has to store the SN identity and the Recovery Counter to enable the selective re-registration.
   - by additional information
      The MS gets from the RAN additional information about the detailed re-registerhandling. E.g. the RAN broadcasts additionally information like the (relative or
      absolute) time when the MS has to re-register.
7. In order to prevent overload within the RAN and the CN, the RAN should take care, that the mobile stations do not re-register simultaneously. E.g.:
   - Inform mobile stations area selective e.g. define a geographical cluster sequence and broadcast the information cluster by cluster
   - Combination with existing RAN mechanisms e.g. radio access restriction
8. The affected mobile stations proceed the information from the RAN and trigger a re-registration. An algorithm within the MS might delay the re-registration message to prevent an overload within the RAN and the CN.
   E.g.: On receiving the information from the RAN, that the SN node has failed:
   - the MS starts a new timer t at a value randomly, uniformly drawn between 0 and t
   - and the RAN has included additional information related to the re-registration handling, the MS should act according to this.

Some advantages of the invention are:
- Increased mobile terminated service availability
- Feasibility of performance and capacity improvements for mobile network nodes
- Feasibility of the introduction of (fully) meshed SN - RAN interconnection (Flexibility)
- Overload prevention due to the selective information transfer to the relevant MS to re-register.

### DETAILLED DESCRIPTION OF THE INVENTION

In the following, the present invention will be described in greater detail on the basis of preferred embodiments with reference to the accompanying drawings, in which:
Figure 1 shows a principle diagram of hierarchical mobile network structure and
Figure 2 shows a principle diagram of completely meshed mobile network structure.

In every figure there are schematically different network entities like a mobile station MS, a radio access network node RAN, serving network node SN and a home network node HN.

The network entities are connected to each other as shown in the figures. The indicated numbers are referred to interaction steps.

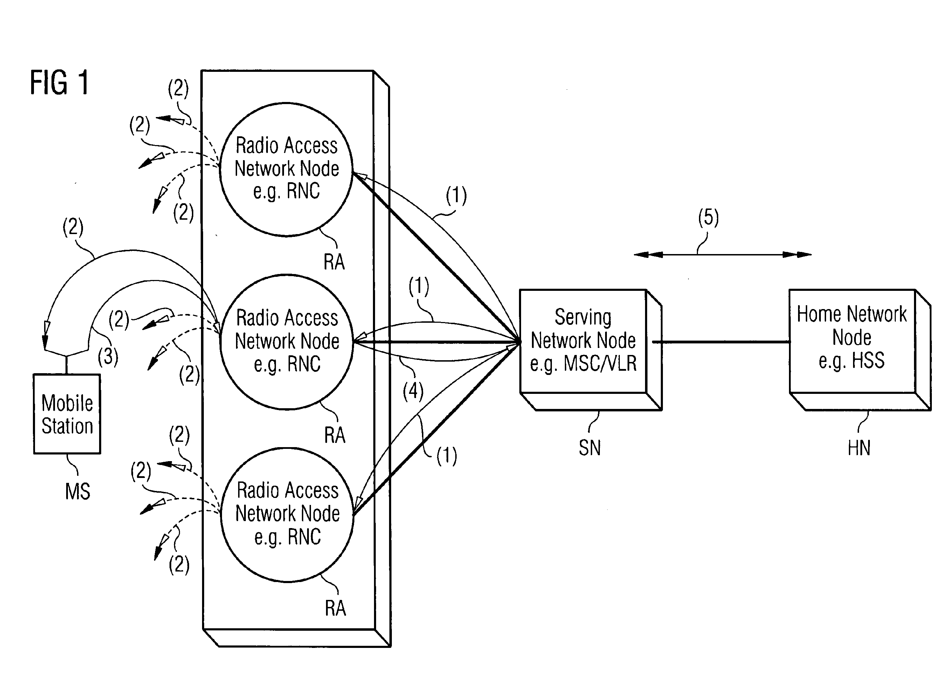

### Detailled Description to figure 1:

### Pre-Requisites:

(a) MSC → MS : During normal operation activities the MSC provides the MS the SN node specific information (Unique SN node identifier and recovery counter) within the MM specific procedure (Attach, Location Update) in a secure manner.
(b) MSC : Mobility data loss within the serving network (SN) node MSC e.g. due to a software upgrade. Thereafter the MSC will be repaired (the MSC recovery counter gets incremented) and is available again.
(1) MSC → RNC : The MSC detects the loss of mobility data and inform the RNC (Radio Network Controller) e.g. via the Iu interface (RANAP - Radio Access Network Application Part - message parameter: SN node identifier, SN Recovery counter, SN Type of Failure)
(2) RNC → MS : On receiving the information from the MSC, the RNC informs the relevant mobile stations about the serving network failure by broadcasting the selective failure information (SN identity; SN Recovery Counter; SN Type of Failure; MS Reaction Information).
(3) MS → RNC : On receiving the selective failure information from the RNC, the MS processes the received selective failure information and the stores the SN node specific information. If the MS is affected (e.g. stored SN node identity = received SN node identity) and a re-register is necessary e.g. due to recovery counter mismatch, the MS triggers the re-registration depending on the received MS Reaction Info. Note: The MS should be able to delay the re-registration autonomously.
(4) RNC → MSC : The RNC routes the received re-registration request of the MS to the MSC.
(5) MS - MSC - HSS : During the re-registration process the mobility data and the profile of the subscriber will be restored in MSC. Furthermore the MS receives within the re-registration procedure the actual SN node specific information (e.g. recovery counter value) of the MSC. As a result of thus the location of the MS is known within the core network, and therefore the MS is reachable for mobile terminated requests again.

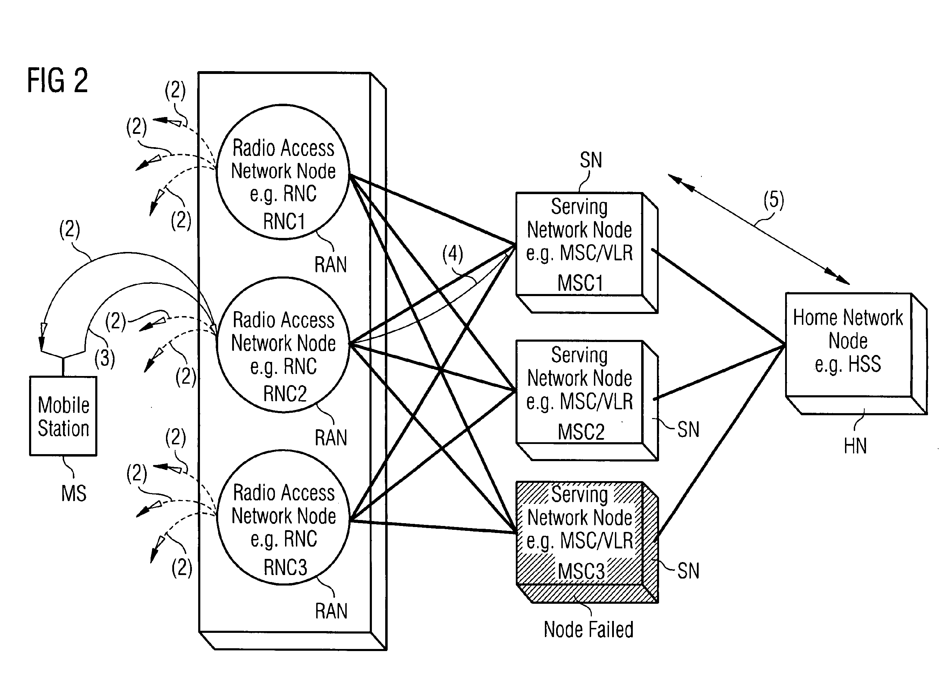

### Detailled Description to figure 2:

### Prerequisites:

(a) MSC → MS : During normal operation activities the SN node provide the MS the SN node specific information (Unique SN node identifier and recovery counter) within the MM specific procedure (Attach, Location Update) in a secure manner.
(b) MSC3 : Mobility data loss within MSC3 e.g. due to physical damage. MSC3 gets not repaired and therefore MSC3 is not available.
(1) RNC : The RNC detects the outage of MSC3 e.g. based on SS7 mechanisms.
(2) RNC → MS : The RNC informs the relevant mobile stations about the serving network node failure by broadcasting the selective failure information (MSC3 identity; MSC3 Type of Failure; MS Reaction Info).
(3) MS → RNC : On receiving the selective failure information from the RNC, the MS processes the received selective failure information and the stores the SN node specific information. If the MS is affected (e.g. stored SN node identity = received MSC3 node identity) and a re-register is necessary e.g. due to type of failure, the MS triggers the re-registration depending on the received MS Reaction Info. Note: The MS should be able to delay the re-registration autonomously.
(4) RNC → MSC : The RNC routes the received re-registration request of the MS to an alternative serving network node e.g. MSC1.
(5) MS - MSC - HSS : During the re-registration process the mobility data and the profile of the subscriber will be restored in MSC1. Furthermore the MS receives within the re-registration procedure the actual SN node specific information of the MSC1. As a result of thus the location of the MS is known within the core network and therefore the MS is reachable for mobile terminated requests again.

In case of MSC3 gets repaired and is available again in the serving network.
Either MSC3 informs the RNC:
   - MSC3 transfer actual SN node specific information to the RNC (e.g. updated recovery counter)
   - The RNC should act according to the received information e.g. stop broadcasting or update broadcasting (e.g. add recovery counter) of the selective failure information
      or the RNC detects, that MSC3 is available again:
   - The RNC may request the actual SN node specific information from MSC3 (e.g. updated recovery counter)
   - The RNC should act according to the received or not received information e.g. stop broadcasting or update broadcasting (e.g. add recovery counter) of the selective failure information.

## Claims

1. Method for restoring information concerning a terminated service within a communication network comprising the following steps of:
a) providing network specific information during normal operation activities,
b) providing selective information in the case of detecting loss of data,
c) comparing said network specific information with said selective information and
d) depending on the result of said comparison initiating a re-registration process.

2. Method according to claim 1, wherein restoring information supports availability of the terminated service.

3. Method according to claim 1 or 2, wherein the method is used within a mobile communication network and the terminated service is represented by a mobile terminated service and loss of data is related to mobility data.

4. Method according to any one of the preceding claims, wherein the selective information comprises failure information.

5. Method according to any one of the preceding claims, wherein at least one terminal equipment (MS) receives the provided network specific information and the provided selective information and performs the steps c) and d) of claim 1.

6. Method according to any one of the claims 2 to 5, wherein the steps a) and b) of claim 1 are performed by a serving network node (SN).

7. Method according to claim 6, wherein the step b) of claim 1 is performed a radio access network node (RAN) instead of the serving network node (SN).

8. Method according to claim 6 or 7, wherein the loss of the mobility data is caused by failure of said serving network node (SN).

9. Method according to any one of the preceding claims , wherein the terminal equipment (MS) is represented by mobile station.

10. Method according to any one of the preceding claims, wherein the terminated service is represented by a call, a Short Message Service, a Multi Media Message Service, a Location Service, Any Time Interrogation or Network Initiated Context Activation.

11. Method according to any one of the preceding claims, wherein the network specific information comprises a serving network node identifier and a recovery counter.

12. Method according to any one of the preceding claims, wherein selective information comprises a service network node identifier, a recovery counter, the type of failure and terminal equipment reaction information.

13. Method according to claim 12, wherein the re-registration process is dependant on the received terminal equipment reaction information.

14. Method according to claim 13, wherein initiating of the re-registration process is delayed according to the terminal equipment reaction information if more than one terminal equipment (MS) perform the re-registration process.

15. Method according to any one of the claims 7 to 14, wherein the mobility data and subscriber profile information were restored in said serving network node (SN).

16. Method according to any one of the claims 8 to 15, wherein if said serving network node (SN) is available again after failure the serving network node informs the radio access network node (RAN).

17. Terminal equipment (MS) suitable to perform the method according to any one of the preceding claims, comprising
- means for receiving network specific information during normal operation activities,
- means for receiving selective information in the case of detecting loss of data,
- means for comparing said network specific information with said selective information and
- means for initiating a re-registration process depending on the result of said comparison.

18. Terminal equipment (MS) according to claim 17, wherein the terminal equipment is represented by a mobile station.

19. Terminal equipment (MS) according to claim 17 or 18, comprising means for delaying initiating said re-registration process.

20. Terminal equipment (MS) according to any one of the claims 17 to 19, wherein loss of data is related to mobility data.

21. Terminal equipment (MS) according to claim 17 to 20, wherein the selective information comprises failure information.

22. Network node (RAN) suitable to perform the method according to any one of the claims 1 to 16, comprising
- means for sending network specific information during normal operation activities,
- means for sending selective information in the case of detecting loss of data and
- means for reacting to a re-registration process.

23. Network node according to claim 22, wherein the network node is represented by a radio access network node (RAN).

24. Network node (SN) suitable to perform the method according to any one of the claims 1 to 16, comprising
- means for sending network specific information during normal operation activities and
- means for sending selective information in the case of detecting loss of data.

25. Network node (SN) according to claim 24, comprising means for restoring data and subscriber profile information.

26. Network node (SN) according to claim 24 or 25, wherein the network node is represented by a serving network node (SN).

27. Network node (SN) according to any one of the claims 20 to 26, wherein loss of data is related to mobility data.

28. Network Node (SN) according to any one of the claims 20 to 27, wherein the selective information comprises failure information.
